Europäisches Patentamt

European Patent Office

Office européen des brevets

(11) Publication number: **0 272 020**
**A1**

## (12) EUROPEAN PATENT APPLICATION

(21) Application number: 87310625.6

(22) Date of filing: 02.12.87

(51) Int. Cl.⁴: **F16B 37/12**

(30) Priority: 10.12.86 GB 8629548

(43) Date of publication of application:
**22.06.88 Bulletin 88/25**

(84) Designated Contracting States:
**AT BE CH DE ES FR GR IT LI LU NL SE**

(71) Applicant: **Cole, Harry Francis**
**10 Fairway Close West Common**
**Harpenden Hertfordshire, AL5 2NN(GB)**

(72) Inventor: **Cole, Harry Francis**
**10 Fairway Close West Common**
**Harpenden Hertfordshire, AL5 2NN(GB)**

(74) Representative: **Jones, Graham H.**
**Graham Jones & Company 77 Beaconsfield**
**Road Blackheath**
**London SE3 7LG(GB)**

(54) **An insert for providing a screw-threaded hole in an object.**

(57) An insert (26) for providing a screw-threaded hole (28) in an object (30), which insert (26) comprises a tapering body (32), a tapering external thread (34) which is provided around the outside of the body (32) and which is for enabling the insert (26) to be screwed into a plain hole (36) in the object (30) such that the insert (26) forms a thread (38) in the object (30) by a swaging action, a shaped recess (40) which extends into the body (32) from a first end (42) of the body (32) and which is for receiving a tool for use in screwing the insert (26) into the hole (36), and a non-tapering internal thread (44) which is provided in a bore (46) which extends from a base (48) of the shaped recess (40) towards a second end (50) of the body (32) remote from the shaped recess (40), the internal thread (44) being for receiving a screw-threaded fastening device (52) which is screwable into and out of the insert (26) through the shaped recess (40), and the external thread (34) being such that it stops at a position (56) with respect to the first end (42) of the body (32) which enables the insert (26) to be screwed as a flush fit into the hole (36).

FIG 3

Xerox Copy Centre

# AN INSERT FOR PROVIDING A SCREW-THREADED HOLE IN AN OBJECT

This invention relates to an insert for providing a screw-threaded hole in an object.

Inserts for providing a screw-threaded hole in an object are known. Where the object is in sheet form or in tubular form, special problems arise due to the material being thin and thus not providing much depth for anchoring the insert. A known insert which is suitable for providing a screw-threaded hole in sheet or tubular material is one having a small flanged head resting on one side of the object, and a body for passing through a plain hole in the object. The body has an internal thread for receiving a screw-threaded fastening device which is screwable into and out of the insert. The body also has a deformable portion which is deformable on insertion of the insert into the hole so that the object becomes sandwiched between the small flanged head on one side and the deformed portion of the body on the other side. Whilst such a known insert works satisfactorily, the flanged head, although only small, may sometimes be unacceptable, for example where the flush mounting of a component being fixed is required. Countersinking is of course possible but if the object is made of very thin material, then it may not be possible to countersink sufficiently far or even to countersink at all. Furthermore, the insert has to be produced in different lengths to allow for different thicknesses of objects being provided with the insert. This is necessary in order to ensure that the insert protrudes sufficiently far through the object that the deformable part of the insert is able to be deformed and in effect to form an annular flange underneath the hole in the object.

It is an aim of the present invention to obviate or reduce the above mentioned problems.

Accordingly, this invention provides an insert for providing a screw-threaded hole in an object, which insert comprises a tapering body, a tapering external thread which is provided around the outside of the body and which is for enabling the insert to be screwed into a plain hole in the object such that the insert forms a thread in the object by a swaging action, a shaped recess which extends into the body from a first end of the body and which is for receiving a tool for use in screwing the insert into the hole, and a non-tapering internal thread which is provided in a bore which extends from a base part of the shaped recess towards a second end of the body remote from the shaped recess, the internal thread being for receiving a screw-threaded fastening device which is screwable into and out of the insert through the shaped recess, and the external thread being such that it stops at a position with respect to the first end of the body which enables the insert to be screwed as a flush fit into the hole.

The insert of the present invention does not rely on the presence of a small flanged head and a deformable portion as mentioned above in connection with the known insert. In fact the insert of the present invention does not have the small flanged head or the deformable portion. In contrast, the insert of the present invention operates with a self-tapping action in the plain hole in the object. The insert forms the thread in the object by a swaging action and it is important to appreciate that the insert does not form a thread in the object by a self-cutting operation. By using a swaging action which gives a self-displacing action of the material of the object, cut material such as swarf is not produced. This has the important advantage that a further finishing action to remove the swarf is not then required. In many industries such for example as the furniture industry, the motor car industry, and those industries producing fridges, washing machines, lawn mowers, central heating and trunking etc. the inserts will be used virtually as the last or one of the last stages of assembly. The various parts to be joined will already be painted and otherwise finished. It is then not possible to have a subsequent assembly operation after the insertion of the insert in the object requiring removal of swarf and the like. The use of the thread which operates with the swaging action obviates the need for any subsequent swarf removing operation.

The plain hole in the object to be provided with the insert will obviously be of a size appropriate to the insert to be received. The tapering body ensures that the insert can initially relatively easily be screwed into the hole, but then with increasing force due to the increasing taper of the insert. This increasing taper ensures extremely good holding characteristics as the insert bites into the object surrounding the hole. When the insert is provided in the hole in the object with a powered placing tool, then the placing tool will usually have a clutch which can be set to slip at the exact moment when the insert is flush with the top of the hole in the object. At this moment, the insert will have been extremely securely tightened into the object. The placing tool may be a pneumatic or other placing tool. It may have a pistol grip arrangement and exchangeable placing heads which can be varied from 3mm in size upwards to receive appropriate screw-threaded fastening devices.

The insert of the present invention is designed for insertion into objects which are in the form of flat sheet material or tubular material. The tubular material can be of any cross-sectional shape. The thickness of the material is preferably at least 1.5mm thick because otherwise the material is beginning to get too thin to give any form of appreciable and lasting grip for the insert. The material can be as thick as may be required and the material need not be in sheet or tubular form and it can be in block form such for example as a casting.

The insert of the present invention has also mainly been designed for objects which are made of a metal such for example as sheet steel and aluminium. It will obviously be a requirement of the insert that it be made of a material which is harder than the material from which the object is made. Thus, for example, if the object is made of steel, then the insert will usually be made of hardened steel. A hardened steel insert or a normal steel insert may be sufficient if the object is made of aluminium. The object could of course be made of a plastics material, wood or other material, in which case there will be no need to harden the insert although a hardened steel insert would thus suffice for substantially most applications with objects formed of most usually used materials. A presently preferred material for making the insert is that known as ENIA case hardened steel, which is case hardened, coated with zinc and clear passivated and de-enbrittled. With such hardened steel, the peaks of the external threads are able to screw into the sides of the object defining the plain hole and the threads will not become worn and therefore subject to being slightly loose during the screwing action.

The external thread may stop just short of the first end of the body. By way of example, the external thread may stop just short of the first end of the body by having from 0.15 to 0.50 of the thread missing. In terms of thread pitch, 0.015mm of the pitch may be missing. In terms of distance of the thread, 0.20 to 0.50 and probably 0.25mm of the thread may be missing.

In one embodiment of the invention, the external thread stops just short of the first end of the body, and a non-threaded tapering portion is provided between the end of the external thread and the first end of the body.

In another embodiment of the invention, the external thread stops just short of the first end of the body, and a lip is provided between the end of the external thread and the first end of the body. The lip may be only very slightly larger than the outside diameter of the external thread.

In a further embodiment of the invention, the external thread stops short of the first end of the body, and a shoulder is provided which extends at 45 degrees (90 degrees inclusive angle) from the end of the external thread to the first end of the body. Preferably, the shoulder is manufactured accurately so that it will consistently produce a flush fitting of the insert with the surface of the object receiving the insert. Also, the shoulder is able to act as a stop arrangement to prevent the insert from being rotated through the object.

The stopping of the external thread just short of the first end of the body acts to form a stop arrangement for preventing the insert being rotated too far and thus rotated through or too far through the object in which the insert is being placed. Where a lip is provided, the last turning of the insert during tightening is effective to force the lip into the sides of the object defining the plain hole as the insert is brought flush with the surface of the object. Producing the insert in hardened steel, or another material which is relatively harder than the material of the object in which the insert is being placed, ensures that the lip is forced into the material of the object, effectively with a swaging action. The insert can be placed with a powered placing tool as mentioned above or it can be placed by hand using, for example, an Allen key or a screwdriver as will be explained in detail hereinbelow.

In another embodiment of the invention, the external thread extends completely to the first end of the body. In this embodiment of the invention, flush fitting of the insert with the surface of the object receiving the insert can still be achieved when the taper of the insert and the plain hole are appropriately sized. Also, where a powered tool is employed, care should be taken to ensure that the clutch slips at exactly the correct moment in time.

The shaped recess may be of any desired shape for taking any appropriate type of tool. Thus, for example, the shaped recess may be in the form of a hexagon for receiving an Allen key, a slot for receiving a blade type screwdriver, or a cross for receiving a Pozidrive type screwdriver.

Preferably, the internal thread extends from the base part of the shaped recess such that the internal thread and the base part of the shaped recess extend radially outwardly to the same extent.

Usually, the internal thread will extend completely to the second end of the body. This is simplest to arrange in manufacture but the internal thread could stop short of the second end of the body providing the screw-threaded fastening device was not going to be screwed the entire way along the internal thread or providing the inside of the insert was such that the screw-threaded fastening device could extend beyond the end of the internal thread.

The external thread may extend completely to the second end of the body.

Preferably, the external thread stops short of the second end of the body to provide a lead-in portion for locating the insert in the plain hole in the object.

The non-threaded lead-in portion may be tapered to continue the taper of the body. Preferably, however, the non-threaded lead-in portion is parallel sided so that it is ·cylindrical. Such a cylindrical lead-in portion may be easier to insert in the plain hole in the object. Furthermore, since the internal thread in the insert has to be formed by an internal tapping operation, the cylindrical lead-in portion can provide an advantageous location for gripping the insert whilst the internal tapping takes place to provide the internal thread.

The body may be such that the angle of taper is an inclusive angle of from 1°· to 5° relative to the longitudinal axis of the insert. Preferably the inclusive angle is 2° relative to the longitudinal axis of the insert.

The angle of the external thread should be chosen to give a good lead-in facility. The pitch of the external thread should be chosen to give good holding characteristics. The external thread may be a fine or a coarse thread.

The insert may be made in various sizes of, for example, 3mm to 8mm with a preferred size being from 3mm to 6mm. Inserts can be produced in different sizes to receive different sizes of screw-threaded fastening device. Obviously, different sizes of screw-threaded ·device are required depending upon the size of components to be fixed in position to the object. The inserts can be made as long as required but they will usually be made of a standard length.

The insert can be made in various desired ways. It is presently preferred however to produce the insert by cold heading.

Embodiments of the invention will now be described solely by way of example and with reference to the accompanying drawings in which:

Figure 1 is a cross section through a known insert prior to insertion in an object;

Figure 2 shows the insert in Figure 1 after insertion in an object;

Figure 3 shows a first insert of the present invention after insertion in an object;

Figure 4 shows a second insert of the invention after insertion in an object; and

Figure 5 shows a third insert of the invention after insertion in an object.

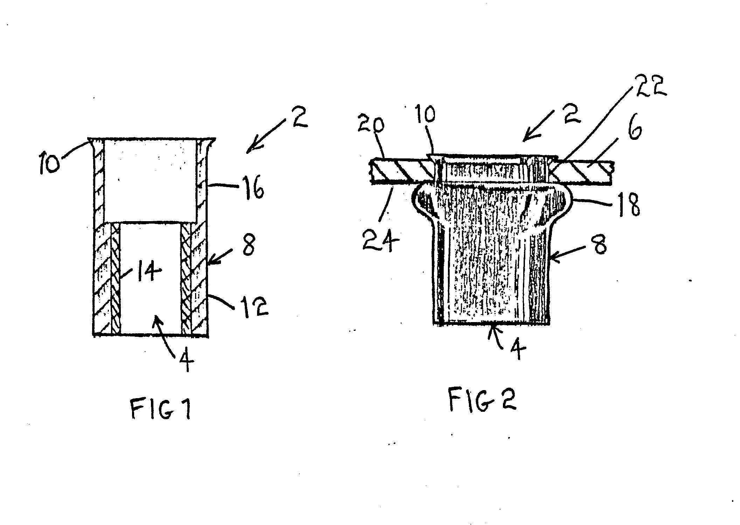

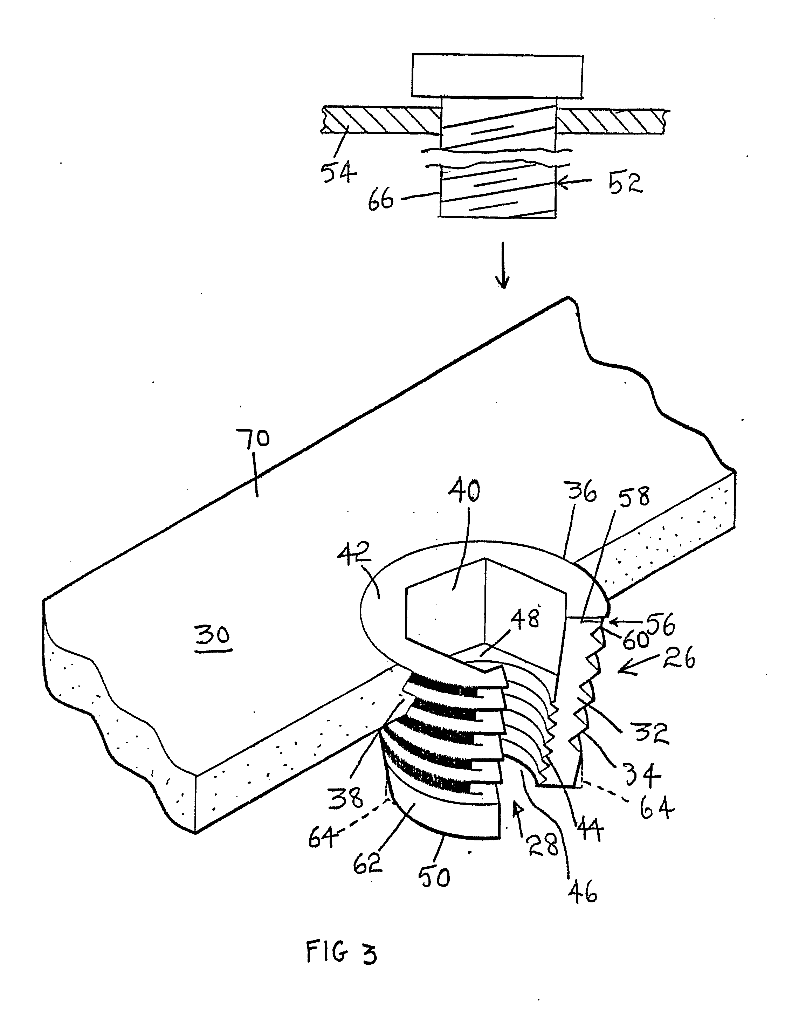

Referring to Figures 1 and 2, there is shown a known insert 2 for providing a screw-threaded hole 4 in an object in the form of sheet metal 6. The insert 2 has a parallel sided body 8 and a small flanged head 10. The body 8 has a portion 12 which is provided with an internal thread 14. The body 8 also has a portion 16 which is thinner walled than the portion 40 and which is deformable as shown in Figure 2 to provide a deformed annular flange 18. The sheet metal 6 thus becomes trapped between the flanged head 10 and the deformed annular flange 18.

The insert 2 can be disadvantageous in some circumstances in that the flanged head 8 extends proud of the surface 20 of the sheet metal 6. This can prevent flush fitting of some components. If the sheet metal 6 is relatively thin, for example of the order of 1.5mm, then it is not possible to countersink the plain hole 22 in the sheet metal 6 because the sheet metal 6 is just not sufficiently thick. If the portion 16 of the body 8 is of a size shown in Figure 1 but the sheet metal 6 is increased several times in thickness, it will then be apparent that the portion 16 will not extend sufficiently far below the surface 24 of the sheet metal 6 for the deformed annular flange 18 to be produced. This means that the insert 2 has to be produced in various lengths to suit various thicknesses of the sheet metal 16. It is not always convenient to produce the insert 2 in various lengths and it is also not always convenient for operators to store various lengths of the insert 2. During assembly of a component, when a screw-threaded fastening device is screwed into the internal thread 14, it sometimes happens that the sheet metal 6 is not sufficiently tightly sandwiched between the flanged head 10 and the deformed annular flange 18. When this happens, the insert 2 starts to rotate and it is not possible to screw the screw-threaded fastening device (not shown) into or out of the portion 12. It is then necessary to drill out the insert 2 which is very troublesome. The deformed annular flange 18 is actually formed by engaging the internal thread 14 in the portion 12 with part of a placing tool (not shown), the placing tool then being such that it pulls the portion 12 upwardly to form the deformed annular flange 18. The locating tool is relatively complex in construction and breakdowns sometimes occur. The placing tool needs a changeable operative head for different sizes of insert 2 and it is not unknown to strip the internal thread 14 during the formation of the deformed annular flange 18. Furthermore, the placing tool has to be reversible which causes problems with slipping the clutch and with the stripping of the internal thread 14. The reversible action is also time consuming to achieve on the placing tool. Further, the placing tool is expensive to manufacture and is susceptible to reoccurring breakdowns.

Having described above disadvantages of the known insert 2, reference will now be made to Figures 3, 4 and 5 and the insert of the present invention, which insert obviates or reduces the above mentioned disadvantages.

Referring more especially to Figure 3, there is shown an insert 26 for providing a screw-threaded hole 28 in an object in the form of sheet metal 30. The insert 26 comprises a tapering body 32. The body 32 has a tapering external thread 34 which is provided around the outside of the body 32 and which is for enabling the insert 26 to be screwed into a plain hole 36 in the sheet metal 30 such that the insert 26 forms a thread 38 in the sheet metal 30 by a swaging action.

The body 32 is also provided with a shaped recess 40 which extends into the body 32 from a first end 42 of the body 32 and which is for receiving a tool (not shown) for use in screwing the insert 26 into the hole 36.

The insert 26 is also provided with a non-tapering internal thread 44 which is provided with a bore 46 which extends from a base part 48 of the shaped recess 40 towards a second end 50 of the body 32 remote from the shaped recess 40. The internal thread 44 is for receiving a screw-threaded fastening device 52 which is screwable into and out of the insert 26 through the shaped recess 40. When the fastening device 52 is tightened in the insert 26, it will be apparent that a component 54 can be tightly secured to the sheet metal 30.

The external thread 34 is such that it stops at a position 56 with respect to the first end 42 of the body 32 which enables the insert 26 to be screwed as a flush fit into the hole 36. The position 56 is such that a non-threaded tapering portion 58 is provided between the end 60 of the external thread 34 and the first end 42 of the body 32. The portion 58 acts as a stop device by just making it slightly harder to turn the insert 26 the last fraction into the hole 36 to produce the required flush fit. This helps manual insertion of the insert 26. If the insert 26 is being inserted with a power tool, then it is slightly easier to set, for example, a clutch slip at the required moment in time for flush fitting of the insert 26 than would be the case if the portion 58 were not present.

It will be seen that the shaped recess 40 is in the shape of a hexagon and this is for receiving a hexagon shaped part of an Allen tool for manual insertion or a hexagon part of a power tool for powered insertion of the insert 26 in the sheet metal 30.

As can also be seen from Figure 3, the internal thread 44 extends from the base part 48 of the shaped recess 40 such that the internal thread 44 and the base part 48 of the shaped recess 40 extend radially outwardly to the same extent.

The internal thread 44 extends completely to the second end 50 of the body 32.

The external thread 34 stops short of the second end 50 of the body 32 to provide a lead-in portion 62 for locating the insert 26 in the hole 36. As shown, the lead-in portion 62 is tapered. Advantageously, the lead-in portion 62 can be parallel sided as shown by the dotted lines 64. A parallel sided lead-in portion may be easier to locate in the hole 36 such that the insert 26 is squarely located for correct insertion into the hole 36. Also, during manufacture, the parallel sided lead-in portion may provide a convenient gripping point for gripping the insert 26 whilst the internal thread 44 is produced.

The body 32 is such that it tapers at an inclusive angle of 2° relative to the longitudinal axis of the insert 26. By way of example, it is mentioned that the body 32 may taper at an angle of from 1° to 5° with respect to the longitudinal axis of the insert 26 if desired.

The angle of the external thread 34 will be chosen to give a good lead-in. Also, the pitch of the external thread will be chosen to give good holding characteristics in the sheet metal 30.

The insert 26 is made of hardened steel. The insert 26 can be made in a variety of sizes from, for example, 3mm to 8mm. The insert 26 can also be made in a variety of lengths but normally one length will suffice since the shank 66 of the fastening device 52 can just be screwed completely though the insert 26 and beyond the second end of the insert 26.

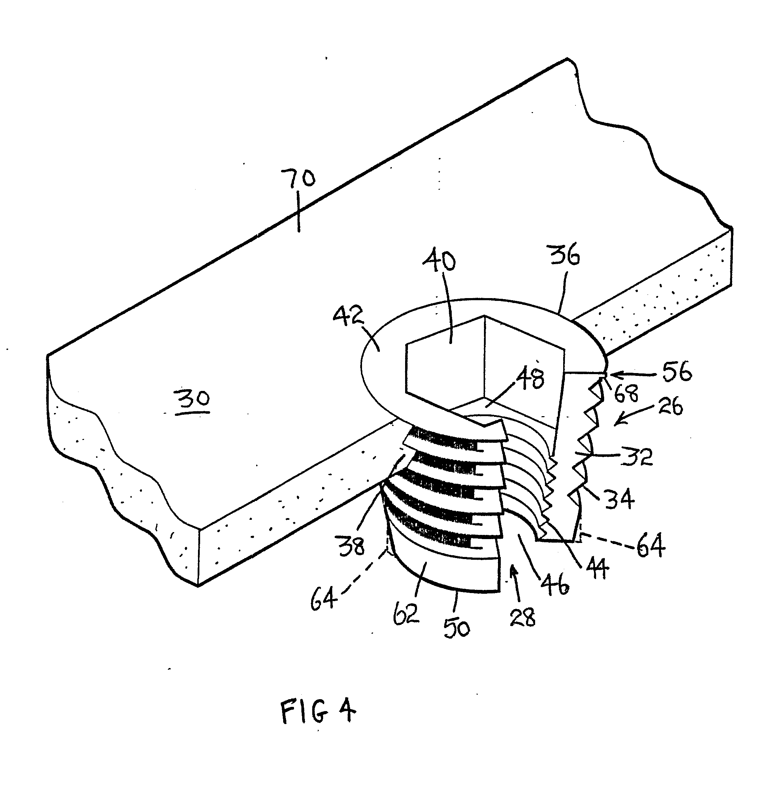

Referring now to Figure 4, similar parts as in Figure 3 have been given the same reference numerals and their precise construction and operation will not again be given. In Figure 4, at the position 56, the portion 58 has been replaced by a small lip 68. The lip 68 is very slightly larger than the outside diameter of the external thread 34. The lip 68 gets forced into the sheet metal 30 during the last fraction of rotation of the insert 26 to bring it flush with the surface 70 of the sheet metal 30.

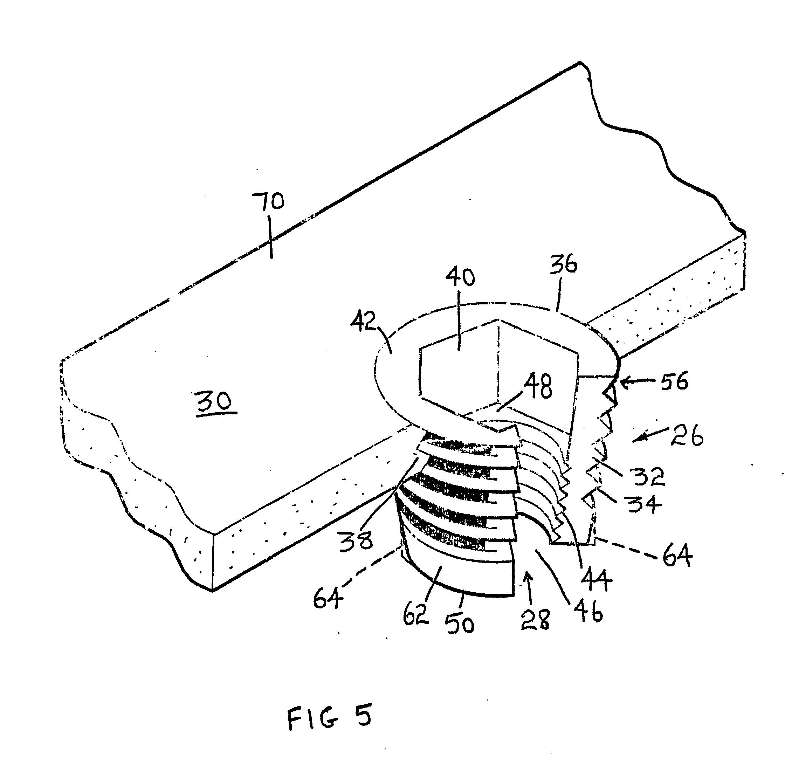

Referring now to Figure 5, similar parts as in Figure 3 have again been given the same reference numerals and their precise construction and operation will not again be given. In Figure 5, the position 56 is such that the external thread 34 extends completely to the first end 42 of the body 32 of the insert 26. Because of the taper on the body 32 making it increasingly harder to screw the insert 26 into the hole 36, it is still possible to bring the insert 26 to a good flush fit with the surface 70 of the sheet metal 30 and without screwing the insert 26 too far through the sheet metal 30 so that it lies beneath the surface 70 of the sheet metal 30. If the insert 26 is being inserted by hand, the placing operation can be done carefully and stopped as may be necessary for visual inspection. If the placing of the insert 26 shown in Figure 5 is being done by a power tool, then it is necessary to ensure that the clutch slips or the power tool otherwise stops rotation of the insert 26 at the appropriate time when the insert 26 is flush with the surface 70 of the sheet metal 30. The placing of the insert 26 is especially quick as no reversing action of the placing tool is required.

It is to be appreciated that the embodiments of the invention described above with reference to the accompanying drawings have been given by way of example only and that modifications may be effected. Thus, for example, the shaped recess 40 could be in the shape of a slot for receiving a blade type screwdriver or a cross for receiving a Pozidrive type screwdriver. Also, the lead-in portion 62 could be omitted and the external thread 34 could be extended completely down to the second end 50 of the insert 26. Further, although the insert 26 is made of hardened steel, it can be made of other materials in dependence upon the type of material into which it is to be inserted, it being necessary that the insert 26 is made of a harder material than the material into which it is being inserted.

## Claims

1. An insert for providing a screw-threaded hole in an object, which insert comprises a tapering body, a tapering external thread which is provided around the outside of the body and which is for enabling the insert to be screwed into a plain hole in the object such that the insert forms a thread in the object by a swaging action, a shaped recess which extends into the body from a first end of the body and which is for receiving a tool for use in screwing the insert into the hole, and a non-tapering internal thread which is provided in a bore which extends from a base part of the shaped recess towards a second end of the body remote from the shaped recess, the internal thread being for receiving a screw-threaded fastening device which is screwable into and out of the insert through the shaped recess, and the external thread being such that it stops at a position with respect to the first end of the body which enables the insert to be screwed as a flush fit into the hole.

2. An insert according to claim 1 in which the external thread stops just short of the first end of the body, and a non-threaded tapering portion is provided between the end of the external thread and the first end of the body.

3. An insert according to claim 1 in which the external thread stops just short of the first end of the body, and a lip is provided between the end of the external thread and the first end of the body.

4. An insert according to claim 1 in which the external thread stops just short of the first end of the body, and a shoulder is provided which extends at 45 degrees from the end of the external thread to the first end of the body.

5. An insert according to any one of the preceding claims in which the shaped recess is in the form of a hexagon, a slot or a cross.

6. An insert according to any one of the preceding claims in which the internal thread extends from the base part of the shaped recess such that the internal thread and the base part of the shaped recess extend radially outwardly to the same extent.

7. An insert according to any one of the preceding claims in which the internal thread extends completely to the second end of the body.

8. An insert according to any one of the preceding claims in which the external thread stops short of the second end of the body to provide a lead-in portion for locating the insert in the plain hole in the object.

9. An insert according to any one of the preceding claims in which the non-threaded lead-in portion is tapered to continue the taper of the body.

10. An insert according to any one of the preceding claims in which the body is such that the angle of taper is an inclusive angle of from 1 to 5 degrees relative to the longitudinal axis of the insert.

FIG 1

FIG 2

FIG 3

FIG 4

FIG 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-1 400 228 (ROSAN ENGINEERING) <br> * figure 19, page 32, paragraph 2 * <br> --- | 1,5 | F 16 B 37/12 |
| A | FR-A- 558 209 (DIETRICH) <br> * figure 4 * <br> --- | 1 | |
| A | GB-A- 350 141 (ARENZ) <br> * figure 4 * <br> --- | 1,5 | |
| A | US-A-1 410 459 (CHENEL) <br> * figure 2, page 1, line 60 * <br> --- | 1,5 | |
| A | US-E- 28 907 (EIBES et al.) <br> * title * <br> --- | 1 | |
| A | EP-A-0 198 275 (KRAEMER) <br> * figure 6 * <br> ----- | 1 | |

|  |  | TECHNICAL FIELDS SEARCHED (Int. Cl.4) |
|---|---|---|
|  |  | F 16 B 37/12 |

The present search report has been drawn up for all claims

| Place of search | Date of completion of the search | Examiner |
|---|---|---|
| BERLIN | 29-01-1988 | ZAPP E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)